# EUROPEAN PATENT SPECIFICATION

(11) **EP 4 358 079 B1**
(45) Date of publication and mention of the grant of the patent: **25.11.2026**
(21) Application number: 23202396.0
(22) Date of filing: 09.10.2023
(51) Int. Cl.: G10K 11/178, G06N 3/02

(54) **APPARATUS, SYSTEM AND/OR METHOD FOR ACOUSTIC ROAD NOISE PEAK FREQUENCY CANCELLATION**
VORRICHTUNG, SYSTEM UND/ODER VERFAHREN ZUR AKUSTISCHEN UNTERDRÜCKUNG DER STRASSENGERÄUSCHSPITZENFREQUENZ
APPAREIL, SYSTÈME ET/OU PROCÉDÉ D'ANNULATION DE FRÉQUENCE DE CRÊTE DE BRUIT DE ROUTE ACOUSTIQUE

(30) Priority: 21.10.2022 US 202217971377
(43) Date of publication of application: 24.04.2024
(73) Proprietor: Harman International Industries, Inc., Stamford, Connecticut 06901 (US)
(72) Inventor: TRUMPY, David, Stamford, CT, 06901 (US); ADARI, Santosh, Stamford, CT, 06901 (US)
(74) Representative: Westphal, Mussgnug & Partner, Patentanwälte mbB

(56) References cited:
- EP-A2- 3 745 393
- WO-A1-2009/155696
- WO-A1-2022/031279
- WO-A1-2022/182351

## Description

### TECHNICAL FIELD

Aspects disclosed herein generally relate to an apparatus, system and/or method for performing acoustic road noise peak frequency cancellation. The disclosed apparatus, system(s) and/or method(s) may be used in connection with active noise cancellation (ANC) systems. These aspects and others will be discussed in more detail herein.

### BACKGROUND

It is known to provide a method and apparatus for a low cost, acoustic tire cavity resonance cancellation. For example, such a system may include a sensor that infers a rotational speed of a vehicle. A frequency generator is configured to synthesize frequencies of a tire cavity resonance according to the rotational speed of the tire to generate a sense signal. An active noise control filter is configured to generate an anti-noise signal from the sense signal. A loudspeaker is configured to convert the anti-noise signal into anti-noise and to radiate the anti-noise to a listening position. The anti-noise signal is configured so that the anti-noise reduces sound of the tire cavity resonance at the listening position.

Document WO 2022/031279 A1 discloses an active noise cancellation (ANC) system with at least one loudspeaker to project anti-noise sound within a passenger cabin of a vehicle in response to receiving an anti-noise signal. At least one microphone provides an error signal indicative of noise and the anti-noise sound within the passenger cabin. An occupancy controller is programmed to modify a transfer function between the at least one microphone and at least one virtual microphone based on an occupancy signal indicative of occupant presence within the passenger cabin. An adaptive filter controller is programmed to filter the error signal using the transfer function to obtain an estimated virtual microphone error signal. A controllable filter generates the anti-noise signal based on the estimated virtual microphone error signal.

Document WO 2022/182351 A1 discloses an active noise cancellation (ANC) system with at least one loudspeaker to project anti-noise sound within a passenger cabin of a vehicle in response to receiving an anti-noise signal and at least one microphone to provide an error signal indicative of noise and the anti-noise sound within the passenger cabin. An adaptive filter controller is programmed to filter the error signal to obtain a noise reduction ratio, and to adjust a step size and/or leakage parameter based on a comparison of the noise reduction ratio to a noise threshold. A controllable filter generates the anti-noise signal based on the adjusted step size and/or leakage parameter.

Document EP 3 745 393 A2 discloses an active noise cancellation (ANC) system including an adaptive filter divergence detector for detecting divergence of the one or more controllable filters as they adapt, based on dynamically adapted thresholds. Upon detection of a controllable filter divergence, the ANC system may be deactivated, or certain speakers may be muted. Alternatively, the ANC system may modify the diverged controllable filters to restore proper operation of the noise cancelling system.

Document WO 2009/155696 A1 discloses systems and methods for processing a signal with a filter employing FIR and/or IIR elements. The required controller function is decomposed into primary FIR and/or IIR elements and a compensation filter is provided to address the latency in the primary elements, which would result in undesired operation of the filter. Several configurations of suitable filters are discussed, including multi-rate filters and filters with reduced power requirements.

### SUMMARY

In at least one embodiment, an active noise cancellation (ANC) system is provided. The ANC system includes at least one loudspeaker, at least one microphone, and a reference generator. The at least one loudspeaker projects anti-noise sound within a cabin of a vehicle based at least on an estimated reference signal and an anti-noise signal. The at least one microphone to provide a first error signal indicative of noise and the anti-noise sound within the cabin. The at least one filter controller programmed to receive the first error signal and the estimated reference signal; and to control at least one adaptive filter to generate the anti-noise signal based at least on the first error signal and the estimated reference signal. The reference generator is programmed to generate the estimated reference signal based at least on one of vehicle speed, temperature of a tire of the vehicle, or tire pressure. The ANC system further includes a frequency downmixer programmed to convert a full bandwidth signal of one of the estimated reference signal and the error signal into a sub-band frequency range prior to the at least one filter controller controlling at least one adaptive filter to generate the anti-noise signal based at least on the first error signal and the estimated reference signal.

In at least one embodiment, a method for performing active noise cancellation (ANC) is provided. The method includes transmitting anti-noise sound within a cabin of a vehicle based at least on an estimated reference signal and an anti-noise signal and providing a first error signal indicative of noise and the anti-noise sound within the cabin. The method includes receiving by at least one filter controller, the first error signal and the estimated reference signal and controlling at least one adaptive filter, via the at least one filter controller, to generate the anti-noise signal via the at least one filter controller based at least on the first error signal and the estimated reference signal. The method further includes generating the estimated reference signal based at least on one of vehicle speed, temperature of a tire of the vehicle, or tire pressure. The method further includes converting by a frequency downmixer a full bandwidth signal of one of the estimated reference signal and the error signal into a sub-band frequency range prior to the at least one filter controller controlling at least one adaptive filter to generate the anti-noise signal based at least on the first error signal and the estimated reference signal.

### BRIEF DESCRIPTION OF THE DRAWINGS

The embodiments of the present disclosure are pointed out with particularity in the appended claims. However, other features of the various embodiments will become more apparent and will be best understood by referring to the following detailed description in conjunction with the accompany drawings in which:
FIGURE 1 depicts one example of a system in a vehicle exhibiting noise source peaks;
FIGURE 2 depicts one example of an ANC system in a vehicle exhibiting noise source peaks;
FIGURE 3 depicts another example of an ANC system in a vehicle exhibiting noise source peaks;
FIGURE 4 depicts an ANC system in accordance with one embodiment;
FIGURE 5 depicts an example of a frequency down mixer of the ANC system of FIGURE 4 in accordance with one embodiment;
FIGURE 6 depicts an example of a frequency up mixer of the ANC system of FIGURE 4 in accordance with one embodiment;
FIGURE 7 depicts one example of a sub-band reference generator that generates reference signals in accordance with one embodiment;
FIGURE 8 depicts another example of a sub-band reference generator that generates reference signals in accordance with one embodiment; and
FIGUREs 9A - 9C depict plots of comparisons of road noise cancellation (RNC) and engine order cancellation (EOC) features.

### DETAILED DESCRIPTION

As required, detailed embodiments of the present disclosure are disclosed herein; however, it is to be understood that the disclosed embodiments are merely exemplary of the disclosure that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present disclosure.

Tire cavity noise is annoying to vehicle passengers. Active Noise Cancellation (ANC) techniques have been employed to reduce this noise in the vehicle cabin. However, this technology may be cost prohibitive for many customer applications. Several methods for cost reduced systems for cancelling tire cavity noise have been proposed. However, such systems may not address two problems: 1) tire cavity noise being comprised of a unique signature/frequency generated by each tire in the vehicle, and 2) a peak frequency may not be reliably determined *a-priori*.

Other prior art systems may provide other challenges. For example, a frequency of the tire cavity peak may not be reliably predicted based on vehicle speed. To cancel noise with an uncertain frequency, adaptive filter parameters (e.g., step size) may be set high to increase cancellation bandwidth. However, this may result in unacceptable out-of-band noise boosting. Out of band boosting may be eliminated by using a lower step size and a better reference for the noise signal frequency. One predictor of tire cavity frequency involves the utilization of an accelerometer signal. However, these concepts may not eliminate the need for an accelerometer.

Each tire produces a different tire cavity resonance frequency. Cancellation of one tire's resonance frequency in one quadrant of a vehicle may potentially create more noise in another quadrant of the vehicle. Typically, each seat location includes tire cavity noise contributions from the closest tire. However, anti-noise signals are generated simultaneously from all loudspeakers. Therefore, anti-noise may reach all seat locations. If the anti-noise frequency is different than the tire cavity peak frequency, both sounds will be present in that seat location. Therefore, it is not possible to simultaneously cancel tire cavity resonance peaks in all seat locations using a narrowband cancellation algorithm.

The disclosed ANC system enables, among other things, structure born noise with narrowband characteristics that may be cancelled without an accelerometer. The ANC system utilizes a stochastic noise model as a reference signal instead of an accelerometer. The ANC system utilizes a multiple output sub-band adaptive filter including multiple references and multiple feedback microphones to reduce tire cavity noise at multiple seat locations in the vehicle. The ANC system may be constantly updating as the environment changes (e.g., temperature, tire pressure, etc.) to handle the unpredictable characteristics of the noise.

The disclosed ANC system may be implemented for RNC applications. The ANC system provides a speaker output that is generated by filtering a reference signal with adaptive filter coefficients. The adaptive filter coefficients may be a frequency translated version of the filter coefficients created by the sub-band adaptive filter. The frequency translation may be performed by a frequency up-mixer.

The sub-band adaptive filter operates on signals that have been downmixed to a complex baseband representation of the signals. The sub-band adaptive filter updates via gradient descent minimization techniques employed in Least Mean Square (LMS) based adaptive filtering systems. The frequency up-mixer converts, a complex Inverse Fast Fourier Transform (IFFF) output to a real set of filter coefficients that are loaded into the adaptive filter. The disclosed up-mixer includes a sequence of a complex signal multiplier and up-sampling and filtering stages. The complex signal multiplies the filter coefficients by a reference frequency to shift the signal from the base-band frequency to a target noise cancellation frequency. The frequency down-mixer converts the real signals (e.g., the reference signal and microphone signals) into a complex base-band representation of those signals. This aspect may allow the adaptive filter to operate on a zoomed-in frequency range.

The disclosed ANC system also provides various solutions for generating reference signals without the use of accelerometers. In one example, noise may be shaped by a bandpass filter to have energy in the frequency range of interest for cancellation. This may avoid latency while adding filters to microphone or reference signals. The ANC system also provides, among other things, a reference noise model that may be generated via one or several methods for predicting signals such as an adaptive filter or neural network. The model may utilize vehicle operating conditions and produce a noise output with similar characteristics to tire cavity noise. The noise model may also take into account each tire independently or summed together. The noise model may be trained using vehicle recordings over multiple operating conditions.

The ANC system includes a sub-band adaptive filter topology that allows for, among other things, simultaneously solving for multiple frequencies at multiple error locations. The sub-band adaptive filter may not require an accelerometer signal to provide a high-coherence reference for in-cabin noise, thereby reducing cost of the system. These aspects and other will be discussed in more detail herein.

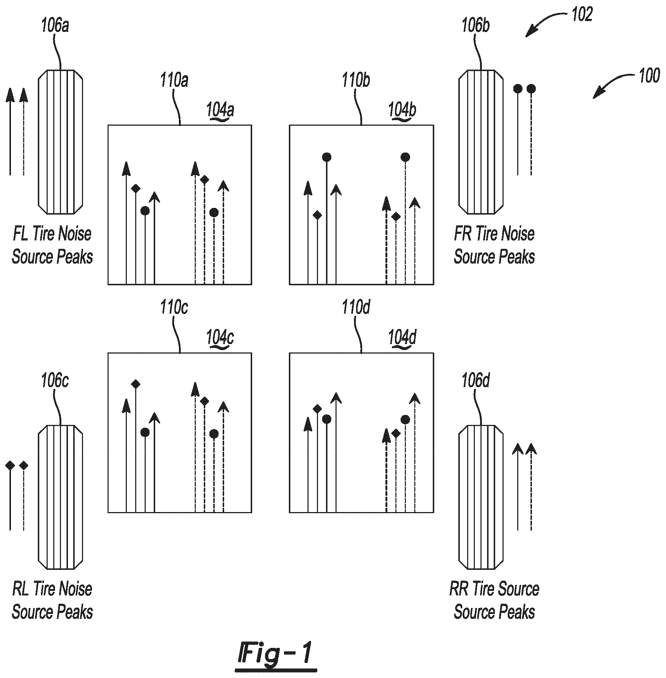

FIGURE 1 depicts one example of a system 100 in a vehicle 102 exhibiting noise source signatures 110a - 110d. The vehicle 102 includes various seat locations 104a - 104d positioned thereabout. The seat location 104a may correspond to a driver positioned in a driver seat (e.g., front left seat), the seat location 104b may correspond to a passenger positioned in a front passenger seat (e.g., front left seat), the seat location 104c may correspond to a passenger positioned in a rear passenger seat (e.g., rear left seat), and the seat location 104d may correspond to a passenger positioned in a rear passenger seat (e.g., rear right seat). The vehicle 102 also includes plurality of wheels 106a - 106d including tires and rims (not shown). The wheel 106a is generally positioned on the front left side of the vehicle 102, the wheel 106b is generally positioned on the front right side of the vehicle 102b, the wheel 106c is generally positioned on the rear left side of the vehicle 102, and the wheel 106d is generally positioned on the rear right side of the vehicle 102. Each of the wheels 106a - 106d (or tires from the wheels 106a - 106d) generate peaks in the noise signatures 110a - 110d that are present at the seat locations 104a - 104d, respectively, when engaged with a road surface. It is recognized that the frequency of the peaks in the noise signatures 110a - 110d may change based on a number of factors, including but not limited to, vehicle speed, road surface, tire pressure, etc.

Each of the noise signatures 110a - 110d includes a compilation (or sum) of the noise peaks at the corresponding seat locations 104a - 104d, respectively. In general, each seat location 104a - 104d experiences the different noise signatures 110a - 110d attributed from the wheels 106a - 106d. As shown, a superposition of waves may create multiples frequencies, or constructively or destructively interfere with one another.

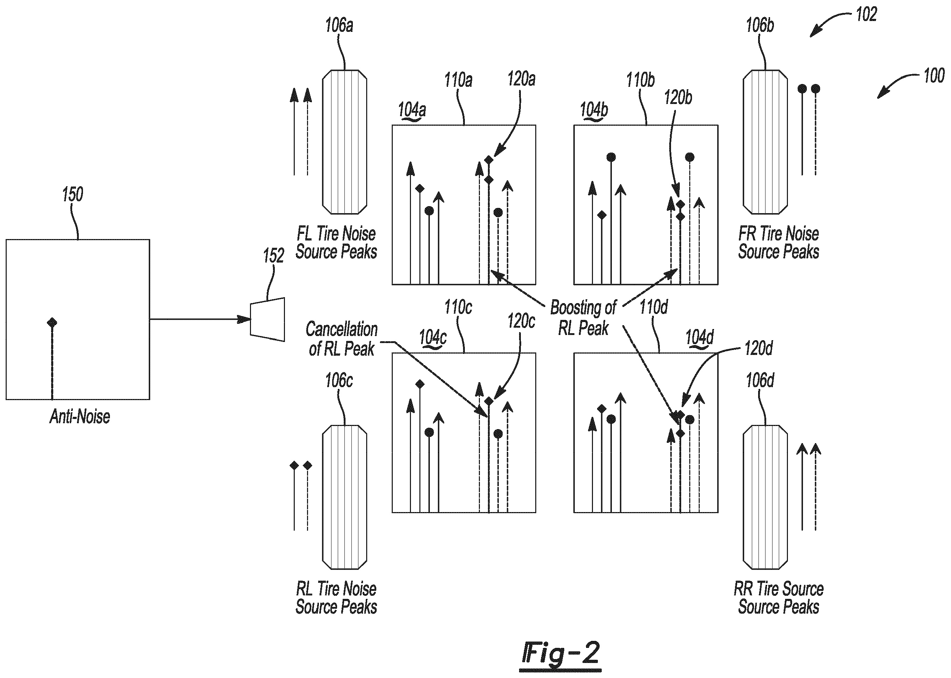

FIGURE 2 depicts another example of the ANC system 100 in the vehicle 102 exhibiting noise source peaks (or signatures 110a - 110d). The system 100 includes an ANC controller 150 and at least one loudspeaker 152 (hereafter "the loudspeaker 152"). In general, the ANC controller 150 generates and transmits anti-noise signals via the loudspeaker 152 in the vehicle 102 and proximate to error microphones (not shown) positioned proximate to seat locations 104a - 104d. FIGURE 2 generally depicts an overall condition of boosting that may be attributed to the anti-noise signals. For example, the ANC controller 150 generates anti-noise signal to cancel noise generated by the wheel 106c. The anti-noise signal as generated by the ANC controller 140 cancels noise generated by the wheel 106a at the seat location 104c which causes increased noise (or boosting) (e.g., see points 120a, 120b, and 120c, and 120d) at the other seat locations 104a, 104b, and 104d. In general, each seat location 104a - 104d experiences the different noise signatures 110a - 110d attributed from the wheels 106a - 106d which leads to the boosting as shown at points 120a, 120b, 120c, and 120d.

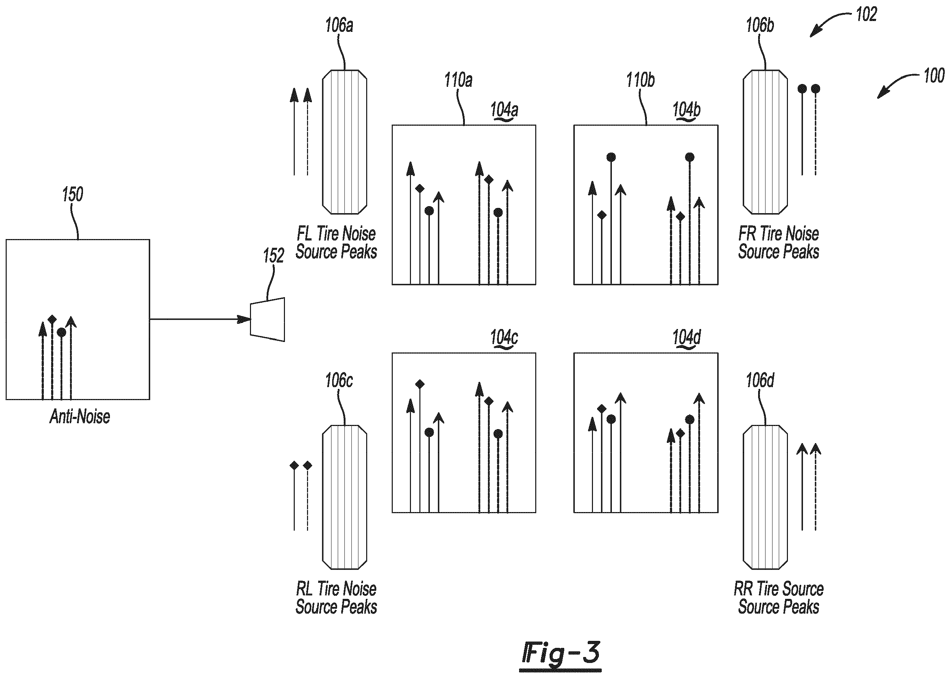

FIGURE 3 depicts another example of the ANC system 100 in the vehicle 102 exhibiting noise source signatures 110a - 110d along with corresponding anti-noise signals to cancel the destructive noise. The disclosed system as set forth in hereafter may generate complex anti-noise signals that may correctly cancel the noise generated by the wheels 106a - 106d without the utilization of accelerometer sensors to generate references signals that are used to generate the anti-noise signals.

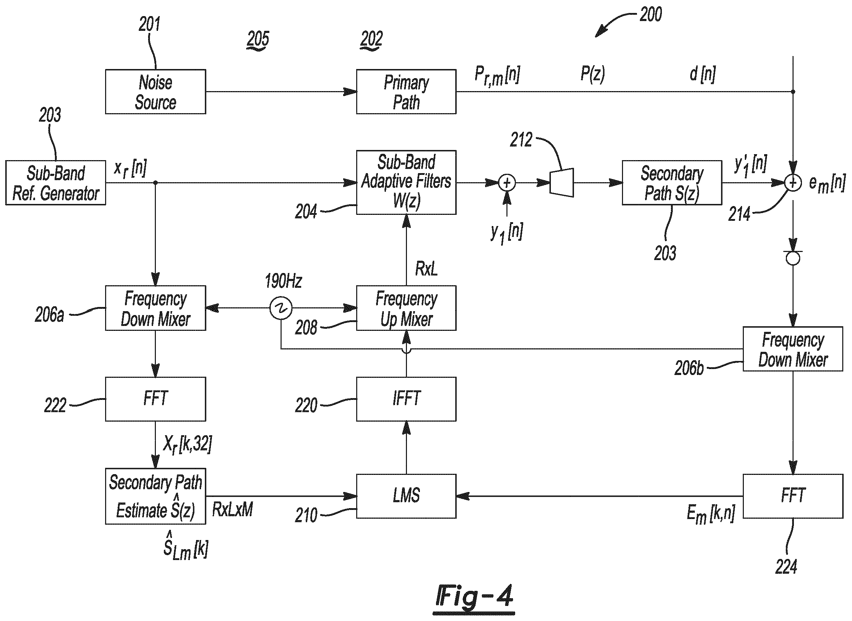

FIGURE 4 depicts a system 200 for performing ANC. In one embodiment, the system 200 may perform acoustic road noise cancellation (RNC) for a vehicle 202. The system 200 generally includes a noise source 201, a sub-band reference generator 203, at least one adaptive filter 204 (hereafter "the adaptive filter 204"), a plurality of frequency down mixers 206a and 206b, a frequency up mixer 208, an adaptive filter controller 210, and at least one loudspeaker 212 (hereafter "the loudspeaker 212), and an error microphone 214. It is recognized that the system 200 includes a at least one controller 205 that is programmed to execute any one or more of the operations as set forth herein in connection with the system 200.

The noise source 201 provides primary noise signals (or a time dependent primary propagation paths in a frequency domain) p*_{r,m}* [n] that are characterized by a primary path transfer function, P(z) (where *r* corresponds to individual reference signals, *r =* 1 ... *R* and *m* corresponds to individual error signals, m = 1 ... *M*). P(z) represents the transfer characteristics of a signal path between the noise source 201 and the error microphone 214. The adaptive filter 204 includes a transfer function, W(z) by which the adaptive filter controller 210 calculates a set of filter coefficients (or parameters) for the adaptive filter 204 and transfers the same via an Inverse Fast Fourier Transform (IFFT) block 220 and the frequency up mixer 208. The adaptive filter controller 210 may be implemented as a Least Mean Squared (LMS) based adaptive filter controller 210.

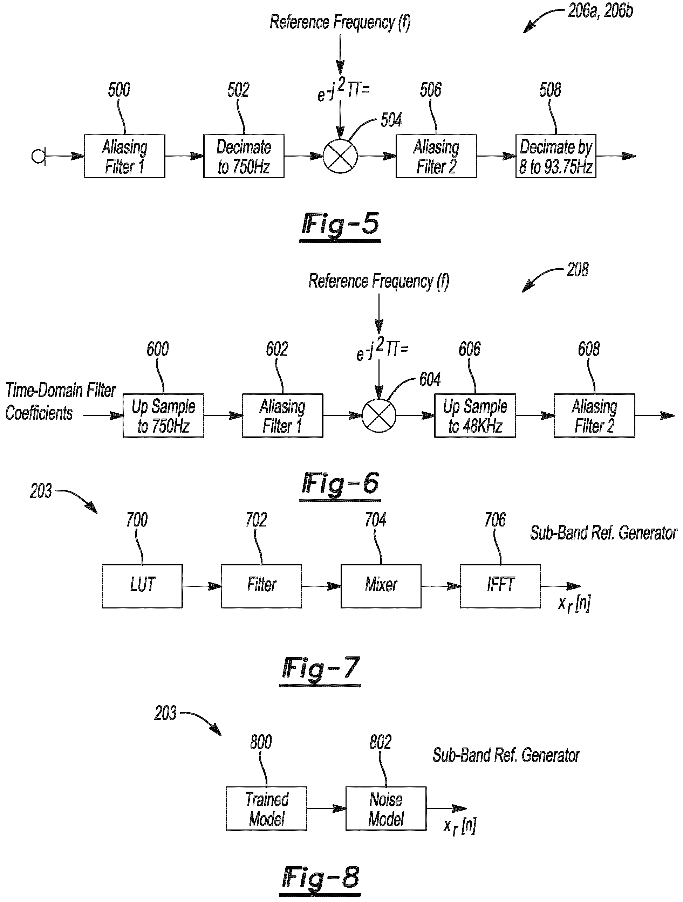

A secondary path that is characterized by a transfer function, S(z) is downstream of the adaptive filter 204. The secondary path may also correspond to s*_{l,m}* [n], where *l* corresponds to secondary sources *l* = 1 ...*L*. The sub-band reference generator 203 generates the reference signal, x*ᵣ[n]*. The manner in which the sub-band reference generator 203 generates the reference signals, x*ᵣ[n]* will be discussed in more detail in connection with FIGUREs 7 and 8. The sub-band reference generator 203 may not require accelerometers. The one or more reference signals may be represented by x*ᵣ[n]* which designate that such reference signals are in the time domain (e.g., Broadband x*_{r-bb}*[n], Narrowband: x*_{r-nb}*[n]). The adaptive filter 204 receives one or more reference signals (or sub-band reference signals) that represent a disturbing noise signal, d*ₙ*[n] generated by the noise source 201. The adaptive filter 204 convolves the reference signals with the latest computed filter coefficients provided by the adaptive filter controller 210 via the IFFT block 220 and the frequency up mixer 208. The adaptive filter 204 generates an anti-noise signal, y*ₗ[n]* (or secondary source signal) which cancels the disturbing noise generated by the noise source 301. The loudspeaker 212 transmits the anti-noise signal, y*ₗ[n]* into listening environment of the vehicle 202 to cancel the disturbing noise for the vehicle occupant. An estimated secondary path is generally defined by a transfer function Ŝ(z) of the actual secondary path transfer function S(z) and is also used by the adaptive filter controller 210 to calculate the filter coefficients of the transfer function, W(z) for the adaptive filter 204. The estimated secondary path may also be defined in the frequency domain as Ŝ*_{l,m} [k]* by an *L x M* matrix.

The error microphone 214 generates an error signal e*ₘ[n]* in the time domain based on a filtered anti-noise signal y'*ₗ[n]* and on the disturbing noise signal, d*ₙ[n]*. The frequency down mixer 206b converts a full bandwidth of the error signal e*ₘ[n]* into a sub-band frequency range. The FFT block 224 generates the error signal, Eₘ *[k,n]* which is in the frequency domain. This aspect will be discussed in more detail below. The adaptive filter controller 210 may utilize the error signals in a frequency domain (e.g., E*ₘ [k,n]*) along with the estimated secondary path Ŝ*_{l,m} [k]* to determine the filter coefficients of the transfer function, W(z). The estimated secondary path Ŝ*_{l,m} [k]* filters the reference signal x*ᵣ[n]* to create a unique reference signal for each adaptive filter 204. The estimated secondary path Ŝ*_{l,m} [k]* is a filter that represents an estimate of S(z). The estimated secondary path Ŝ*_{l,m} [k]* is generally set during the tuning of the ANC algorithm and S(z) represents the secondary path in the vehicle 202 which may change. While FIGURE 4 illustrates a single adaptive filter 204, it is recognized that there may be any number of adaptive filters 204 in addition to the other components illustrated in FIGURE 4 implemented in the system 200. In general, the frequency domain reference *Xᵣ[n]* may be multiplied by the frequency domain secondary path estimate Ŝ*_{l,m} [k]* to produce a reference signal for each sub-band adaptive filter adaptation in the adaptive filter controller (or LMS block) 210. This process generally expands R reference signals into a *R x L x M.*

The frequency down mixer 206a generates an estimated reference signal Xᵣ *[n]* in the time domain. This operation will be discussed in more detail below. An FFT block 222 converts the time-based domain of the estimated reference signal x*ᵣ[n]* into an estimated reference signal in a frequency domain, Xᵣ *[k, n]*. The adaptive filter controller 210 may utilize the error signals in a frequency domain (e.g., E*ₘ [k,nJ)* along with the estimated reference signal Xᵣ *[k, n]* in the frequency domain to determine the filter coefficients of the transfer function, W(z). For example, the adaptive filter controller 210 may employ an LMS gradient decent for determining the filter coefficients for the coefficients for the adaptive filter 204. In general, the frequency down mixers 206a, 206b and the frequency up mixer 208 converts the adaptive filter 204 into a sub-band adaptive filter which focuses on a frequency of interest. While the adaptive filter controller 210 is generally shown as an LMS based controller, it is recognized that the adaptive filter controller 210 may be implemented as n-LMS, Recursive Least Squares, etc.).

FIGURE 5 depicts an example of the frequency down mixer 206a or 206b of the ANC system 200 of FIGURE 4 in accordance with one embodiment. The frequency down mixer 206a or 206b is generally configured to convert a full bandwidth signal of the estimated reference signal x*ᵣ[n]* or the error signal, e*ₘ[n]* into a sub-band frequency range.

The frequency down mixer 206a or 206b includes a first aliasing filter 500, a first decimator 502, a multiplier circuit 504, a second aliasing filter 506, and a second decimator 508. The first aliasing filter 500 attenuates the incoming signal in the time domain (e.g., estimated reference signal x*ᵣ[n]* or the error signal, eₘ*[n]*) above, for example, 300Hz. The first decimator 502 decimates the output from the first aliasing filter 500 into, for example, 750 samples per second. The first decimator 502 lowers a sampling rate of the output of the first aliasing filter 500 for more efficient processing. The multiplier circuit 504 receives the output from the first decimator 502 and a reference frequency, *f* that provides a complex exponential signal that is created from the reference frequency, *f*. The multiplier circuit 504 shifts the reference frequency, f to 0 Hz. The second aliasing filter 506 removes frequencies from the reference frequency that are outside a range from, for example, a reference frequency of - 40 Hz to + 40 Hz. The second decimator 508 decimates the output provided by the second aliasing filter 506 from, for example, 8 to 93.75 Hz which increases a frequency resolution to achieve a high-resolution frequency analysis. The frequency down mixer 206a or 206b then provides a final output that is a narrow-band time domain-based signal.

FIGURE 6 depicts an example of the frequency up mixer 208 of the ANC system 200 of FIGURE 4 in accordance with one embodiment. The frequency up mixer 208 is generally configured to provide the filter coefficients to the adaptive filter 204 and provide interpolation and mixing stages to convert the baseband filter coefficients to the frequency range of the physical system. The frequency up mixer 208 includes a first up sample circuit 600, a first aliasing filter 602, a multiplier circuit 604, a second up sample circuit 606, and a second aliasing filter 608. The first up sample circuit 600 up samples the frequency, for example, to 750 Hz. This aspect increases the sampling rate prior to the frequency mixing occurring. The first aliasing filter 602 removes images from the output of the first up sample circuit 600 created by the up-sampling process (or by the first up sample circuit 600).

The multiplier circuit 604 performs complex multiplication with a complex exponential signal that is generated by a reference frequency, *f*. This aspect shifts the filter coefficients generated by the adaptive filter controller 210 from, for example, 0 Hz back to the reference frequency, *f* The second up sample circuit 606 up-samples the output of the multiplier circuit 604 to, for example, 48 KHz. This aspect converts the filter coefficients back to the system sampling rate. The second antialiasing filter 608 removes images created during the up-sampling process (e.g., by the second upsample circuit 606). The frequency up-mixer 208 provides filter coefficients of the adaptive filter 204 in the time domain at the system sampling rate.

FIGURE 7 depicts one example of the sub-band reference generator 203 of FIGURE 2 that generates reference signals in accordance with one embodiment. The sub-band reference generator 203 includes a look up table (LUT) 700, a filter 702, a mixer 704, and an IFFT block 706. The LUT 700 may store data corresponding to vehicle speed, temperature and/or tire pressure information to determine an appropriate frequency range to provide as a reference signal. The LUT 700 stores and provides a corresponding frequency value based on the tire pressure, temperature of the tire, and/or vehicle speed. Thus, the controller 205 (see FIGURE 2) may receive information related to the vehicle speed, the temperature, and/or the tire pressure information over a data communication bus in the vehicle 202. In one example, the data communication bus may be implemented as a Controller Area Network (CAN) data bus. In general, a vehicle speed sensor (or a wheel speed sensor) and an accelerometer measure different aspects. The wheel speed sensor measures a speed at which a tire or wheel. On the other hand, the accelerometer measures vibration due to tire cavity noise. A vehicle speed sensor can be used generally to predict a noise range that the peak noise will be in, and the sub-band reference generator 203 may provide a time-domain signal corresponding to that predicted noise range that the peak noise may be present in. The accelerometers provide a realtime vibration signal that is a time-domain signal of the actual tire peak noise. With one or more of the embodiments disclosed herein, it is possible to reuse the existing vehicle speed sensor (or the wheel speed sensor) while eliminating the accelerometer which are traditionally known as being expensive.

The controller 205 selects the corresponding frequency from the LUT 700 based on any one or more of the input variables (e.g., vehicle speed, temperature of tire, and/or tire pressure information from one or more wheels). The controller 205 may receive a corresponding vehicle speed input and/or tire pressure reading from each corresponding wheel in the vehicle 202. For example, a corresponding wheel speed sensor or tachometer may be positioned proximate to each wheel to provide the speed of the wheel as the vehicle 202 travels. Similarly, a corresponding tire pressure sensor may be positioned on a wheel/tire and provide a tire pressure reading and/or temperature for the corresponding tire. Thus, in this regard, the LUT 700 provides a corresponding frequency for each tire/wheel of the vehicle 202. The frequency for each tire/wheel may be indicative of road noise that requires cancellation. An example of the noise present at each of the wheel/tires is generally shown in FIGUREs 1 - 3 for reference.

The filter 702 filters the corresponding frequency signal. The mixer 704 sums all of the frequencies (e.g., four frequencies assuming the vehicle 202 has four tires/wheels) to form a single reference signal. In one example, the noise source signatures 110a - 110c as shown in connection with FIGUREs 1 - 3 may correspond to a summed single reference signal. The IFFT block 706 generates a time domain-based reference signal that includes the sum of frequency sinusoids to provide the reference signal xᵣ*[n]*. In another embodiment, the controller 205 as shown in FIGURE 4 may load frequency domain information (e.g., magnitude and phase of frequency of interest based on the vehicle speed, temperature of tire, and/or tire pressure information from one or more wheels) into the IFFT block 220 to convert the frequency domain information into the time domain

FIGURE 8 depicts another example of the sub-band reference generator 203 of FIGURE 2 that generates reference signals in accordance with one embodiment. The sub-band reference generator 203 includes a trained model 800 and a noise model 802. The trained model 800 creates the noise signal (or reference signal) based on environment models. Environmental models may be filter banks that are tuned based on data recorded from a target vehicle or from a historical set of data from multiple vehicles. The system 200 may adjust the model based on environmental parameters such as wheel speed, tire pressure, tire temperature, etc. A successfully trained model represents a spectral envelope of the frequency range of interest based on the environmental parameters. The filters could be implemented based on Linear Predictive Coding (LPC) modeling of the peak noise in conjunction with models that relate a spectral envelope with the environmental parameters. White noise is then played through these filters to generate a time-domain reference signal.

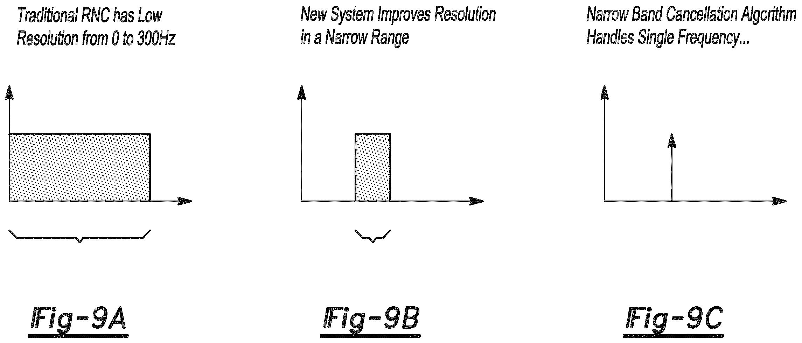

FIGUREs 9A - 9B depict plots of comparisons of road noise cancellation (RNC) and engine order cancellation (EOC) features. FIGURE 9A generally depicts the condition in which a traditional road noise cancellation (RNC) system exhibits a low resolution from 0 to 300 Hz. FIGURE 9B generally depicts the condition in which the disclosed system 200 improves resolution in a narrow range. FIGURE 9C depicts the condition in which a narrowband cancellation algorithm handles a single frequency. In reference to FIGURE 9B, one anti-noise sinusoid signal produced by a single source may not cancel multiple frequencies produced by multiple tires at multiple seat locations. The frequency spacing of multiple noise peaks may be narrower than one FFT bin from a low resolution RNC system. A RNC system may have a FFT resolution of 128 bins spanning over 300Hz which provides a 2.3Hz resolution for the adaptive filter and anti-noise generation. The adaptive filter may not be able to converge to a magnitude and phase for multiple frequencies closer than this resolution. Using the zoom approach, spanning 93.75Hz will achieve a 0.7Hz resolution.

It is recognized that the controllers as disclosed herein may include various microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, such controllers as disclosed utilizes one or more microprocessors to execute a computer-program that is embodied in a non-transitory computer readable medium that is programmed to perform any number of the functions as disclosed. Further, the controller(s) as provided herein includes a housing and the various number of microprocessors, integrated circuits, and memory devices ((e.g., FLASH, random access memory (RAM), read only memory (ROM), electrically programmable read only memory (EPROM), electrically erasable programmable read only memory (EEPROM)) positioned within the housing. The controller(s) as disclosed also include hardware-based inputs and outputs for receiving and transmitting data, respectively from and to other hardware-based devices as discussed herein.

While exemplary embodiments are described above, it is not intended that these embodiments describe all possible forms of the disclosure. Rather, the words used in the specification are words of description rather than limitation, and it is understood that various changes may be made without departing from the scope of the invention as defined in the appended claims. Additionally, the features of various implementing embodiments may be combined to form further embodiments of the disclosure.

## Claims

1. An active noise cancellation (ANC) system (200) comprising:
at least one loudspeaker (212) to project anti-noise sound within a cabin of a vehicle based at least on an estimated reference signal (Xᵣ *[n]*) and an anti-noise signal (y*ₗ[n]*);
at least one microphone (214) to provide a first error signal (eₘ*[n]*) indicative of noise and the anti-noise sound within the cabin;
at least one filter controller (210) programmed to:
receive the first error signal (eₘ*[n]*) and the estimated reference signal (Xᵣ *[n]*); and
control at least one adaptive filter (204) to generate the anti-noise signal (y*ₗ[n]*) based at least on the first error signal (eₘ*[n]*) and the estimated reference signal (Xᵣ *[n]*); and
a reference generator (203) programmed to generate the estimated reference signal (Xᵣ *[n])* based at least on one of vehicle speed, temperature of a tire of the vehicle, or tire pressure; and
a frequency downmixer (206a, 206b) programmed to convert a full bandwidth signal of one of the estimated reference signal (Xᵣ *[n]*) and the error signal (eₘ*[n]*) into a sub-band frequency range prior to the at least one filter controller (210) controlling at least one adaptive filter (204) to generate the anti-noise signal (y*ₗ[n]*) based at least on the first error signal (eₘ*[n]*) and the estimated reference signal (Xᵣ *[n]*).

2. The ANC system (200) of claim 1, wherein the reference generator (203) is further programmed to generate the estimated reference signal (Xᵣ *[n]*) having a frequency range of interest based at least on one of the vehicle speed, the temperature of the tire of the vehicle, or the tire pressure.

3. The ANC system (200) of claim 1, wherein the reference generator (203) is further programmed to generate the estimated reference signal (Xᵣ *[n]*) independent of information from an accelerometer.

4. The ANC system (200) of claim 1 further comprising memory including a look up table (LUT) to store a frequency value to provide the estimated reference signal (Xᵣ *[n]*) to the at least one filter controller (210) based on at least one of the vehicle speed, the temperature of the tire of the vehicle, or the tire pressure.

5. The ANC system (200) of claim 4, wherein the LUT stores the frequency value based on the at least one of the vehicle speed, the temperature of the tire of the vehicle, or the tire pressure for each tire in the vehicle.

6. The ANC system (200) of claim 5, wherein the reference generator (203) includes a mixer (704) to sum each frequency value for each tire in the vehicle to provide the estimated reference signal (Xᵣ *[n]*) as a single estimated reference signal (Xᵣ *[n]*).

7. The ANC system (200) of claim 1, wherein the reference generator (203) includes a trained model (800) that provides a spectral envelope of a frequency range of interest for the estimated reference signal (Xᵣ *[n]*) based on environmental parameters.

8. The ANC system (200) of claim 7, wherein the environmental parameters correspond to the at least one of the vehicle speed, the temperature of a tire of the vehicle, or the tire pressure.

9. The ANC system (200) of claim 7, wherein the trained model (800) represents a historical set of data for the vehicle speed, the temperature of the tire, and the tire pressure and corresponding frequency value.

10. The ANC system (200) of claim 1, wherein the frequency downmixer (206a, 206b) includes:
a first aliasing filter (500) programmed to attenuate one of the estimated reference signal (Xᵣ *[n]*) and the error signal (eₘ*[n]*) to provide a first output;
a first decimator (502) programmed to lower a sampling rate of the first output to provide a second output;
a multiplier circuit (504) programmed to receive a reference frequency and the second output to provide a complex exponential signal;
a second aliasing filter (506) programmed to provide to remove frequencies from the reference frequency that are outside of a predetermined frequency range;
a second decimator (508) programmed to provide a decimate a third output from the second aliasing filter (506) to increase a frequency resolution of the one of the reference signal and the error signal (eₘ*[n]*).

11. A method for performing active noise cancellation (ANC), the method comprising:
transmitting anti-noise sound within a cabin of a vehicle based at least on an estimated reference signal (Xᵣ *[n]*) and an anti-noise signal (y*ₗ[n]*);
providing a first error signal (eₘ*[n]*) indicative of noise and the anti-noise sound within the cabin;
receiving by at least one filter controller (210), the first error signal (eₘ*[n]*) and the estimated reference signal (Xᵣ *[n]*);
controlling at least one adaptive filter (204), via the at least one filter controller (210), to generate the anti-noise signal (y*ₗ[n]*) via the at least one filter controller (210) based at least on the first error signal (eₘ*[n]*) and the estimated reference signal (Xᵣ *[n]*);
generating the estimated reference signal (Xᵣ *[n]*) based at least on one of vehicle speed, temperature of a tire of the vehicle, or tire pressure; and
converting by a frequency downmixer (206a, 206b) a full bandwidth signal of one of the estimated reference signal (Xᵣ *[n]*) and the error signal (eₘ*[n]*) into a sub-band frequency range prior to the at least one filter controller (210) controlling at least one adaptive filter (204) to generate the anti-noise signal (y*ₗ[n]*) based at least on the first error signal (eₘ*[n]*) and the estimated reference signal (Xᵣ *[n]*).

12. The method of claim 11, wherein generating the estimated reference signal (Xᵣ *[n]*) further includes generating the estimated reference signal (Xᵣ *[n]*) having a frequency range of interest based at least on one of the vehicle speed, the temperature of the tire of the vehicle, or the tire pressure.

13. The method of claim 11, wherein generating the estimated reference signal (Xᵣ *[n])* further includes generating the estimated reference signal (Xᵣ *[n]*) independent of information from an accelerometer.

14. The method of claim 11 further comprising storing a frequency value to provide the estimated reference signal (Xᵣ *[n]*) in a lookup table (LUT) prior to transmitting the anti-noise sound within the cabin of the vehicle.

## Patentansprüche

1. System (200) zur aktiven Geräuschunterdrückung (ANC), umfassend:
mindestens einen Lautsprecher (212) zum Projizieren von Antischall innerhalb einer Kabine eines Fahrzeugs basierend zumindest auf einem geschätzten Referenzsignal (Xᵣ*[n]*) und einem Antischallsignal (y*ₗ[n]*);
mindestens ein Mikrofon (214) zum Bereitstellen eines ersten Fehlersignals (eₘ*[n]*), das ein Geräusch und den Antischall innerhalb der Kabine anzeigt;
mindestens eine Filtersteuereinheit (210), programmiert zum:
Empfangen des ersten Fehlersignals (eₘ*[n]*) und des geschätzten Referenzsignals (Xᵣ*[n]*); und
Steuern mindestens eines Adaptivfilters (204) zum Erzeugen des Antischallsignals (y*ₗ[n]*) basierend zumindest auf dem ersten Fehlersignal (eₘ*[n]*) und dem geschätzten Referenzsignal (Xᵣ*[n]*); und
einen Referenzsignalgenerator (203), programmiert zum Erzeugen des geschätzten Referenzsignals (Xᵣ*[n]*) basierend zumindest auf einem von Fahrzeuggeschwindigkeit, Temperatur eines Reifens des Fahrzeugs oder Reifendruck; und
einen Frequenzabwärtsmischer (206a, 206b), programmiert zum Umwandeln eines Vollbandbreitensignals eines von dem geschätzten Referenzsignal (Xᵣ*[n]*) und dem Fehlersignal (eₘ*[n]*) in einen Teilbandfrequenzbereich vor dem Steuern mindestens eines Adaptivfilters (204) durch die mindestens eine Filtersteuereinheit (210) zum Erzeugen des Antischallsignals (y*ₗ[n]*) basierend zumindest auf dem ersten Fehlersignal (eₘ*[n]*) und dem geschätzten Referenzsignal (Xᵣ*[n]*).

2. ANC-System (200) nach Anspruch 1, wobei der Referenzsignalgenerator (203) ferner programmiert ist zum Erzeugen des geschätzten Referenzsignals (Xᵣ*[n]*), das einen interessierenden Frequenzbereich aufweist, basierend zumindest auf einem von der Fahrzeuggeschwindigkeit, der Temperatur des Reifens des Fahrzeugs oder dem Reifendruck.

3. ANC-System (200) nach Anspruch 1, wobei der Referenzsignalgenerator (203) ferner programmiert ist zum Erzeugen des geschätzten Referenzsignals (Xᵣ*[n]*) unabhängig von Informationen von einem Beschleunigungsmesser.

4. ANC-System (200) nach Anspruch 1, ferner umfassend einen Speicher, beinhaltend eine Nachschlagetabelle (LUT) zum Speichern eines Frequenzwerts zum Bereitstellen des geschätzten Referenzsignals (Xᵣ*[n]*) an die mindestens eine Filtersteuereinheit (210) basierend auf mindestens einem von der Fahrzeuggeschwindigkeit, der Temperatur des Reifens des Fahrzeugs oder dem Reifendruck.

5. ANC-System (200) nach Anspruch 4, wobei die LUT den Frequenzwert basierend auf dem mindestens einen von der Fahrzeuggeschwindigkeit, der Temperatur des Reifens des Fahrzeugs oder dem Reifendruck für jeden Reifen in dem Fahrzeug speichert.

6. ANC-System (200) nach Anspruch 5, wobei der Referenzsignalgenerator (203) einen Mischer (704) beinhaltet zum Summieren jedes Frequenzwerts für jeden Reifen in dem Fahrzeug zum Bereitstellen des geschätzten Referenzsignals (Xᵣ*[n]*) als ein einzelnes geschätztes Referenzsignal (Xᵣ*[n]*).

7. ANC-System (200) nach Anspruch 1, wobei der Referenzsignalgenerator (203) ein trainiertes Modell (800) beinhaltet, das eine Spektralhüllkurve eines interessierenden Frequenzbereichs für das geschätzte Referenzsignal (Xᵣ*[n]*) basierend auf Umgebungsparametern bereitstellt.

8. ANC-System (200) nach Anspruch 7, wobei die Umgebungsparameter dem mindestens einen von der Fahrzeuggeschwindigkeit, der Temperatur eines Reifens des Fahrzeugs oder dem Reifendruck entsprechen.

9. ANC-System (200) nach Anspruch 7, wobei das trainierte Modell (800) einen historischen Datensatz für die Fahrzeuggeschwindigkeit, die Temperatur des Reifens und den Reifendruck und einen entsprechenden Frequenzwert repräsentiert.

10. ANC-System (200) nach Anspruch 1, wobei der Frequenzabwärtsmischer (206a, 206b) beinhaltet:
einen ersten Aliasing-Filter (500), programmiert zum Dämpfen eines von dem geschätzten Referenzsignal (Xᵣ*[n]*) und dem Fehlersignal (eₘ*[n]*) zum Bereitstellen einer ersten Ausgabe;
einen ersten Dezimator (502), programmiert zum Verringern einer Abtastrate der ersten Ausgabe zum Bereitstellen einer zweiten Ausgabe;
eine Multiplizierschaltung (504), programmiert zum Empfangen einer Referenzfrequenz und der zweiten Ausgabe zum Bereitstellen eines komplexen Exponentialsignals;
einen zweiten Aliasing-Filter (506), programmiert zum Bereitstellen zum Entfernen von Frequenzen von der Referenzfrequenz, die außerhalb eines vorbestimmten Frequenzbereichs liegen;
einen zweiten Dezimator (508), programmiert zum Bereitstellen eines Dezimierens einer dritten Ausgabe von dem zweiten Aliasing-Filter (506) zum Erhöhen einer Frequenzauflösung des einen von dem Referenzsignal und dem Fehlersignal (eₘ*[n]*).

11. Verfahren zum Durchführen einer aktiven Geräuschunterdrückung (ANC), wobei das Verfahren umfasst:
Übertragen von Antischall innerhalb einer Kabine eines Fahrzeugs basierend zumindest auf einem geschätzten Referenzsignal (Xᵣ*[n]*) und einem Antischallsignal (y*ₗ[n]*);
Bereitstellen eines ersten Fehlersignals (eₘ*[n]*), das ein Geräusch und den Antischall innerhalb der Kabine anzeigt;
Empfangen durch mindestens eine Filtersteuereinheit (210) des ersten Fehlersignals (eₘ*[n]*) und des geschätzten Referenzsignals (Xᵣ*[n]*);
Steuern mindestens eines Adaptivfilters (204) über die mindestens eine Filtersteuereinheit (210) zum Erzeugen des Antischallsignals (y*ₗ[n]*) über die mindestens eine Filtersteuereinheit (210) basierend zumindest auf dem ersten Fehlersignal (eₘ*[n]*) und dem geschätzten Referenzsignal (Xᵣ*[n]*);
Erzeugen des geschätzten Referenzsignals (Xᵣ*[n]*) basierend zumindest auf einem von Fahrzeuggeschwindigkeit, Temperatur eines Reifens des Fahrzeugs oder Reifendruck; und
Umwandeln durch einen Frequenzabwärtsmischer (206a, 206b) eines Vollbandbreitensignals eines von dem geschätzten Referenzsignal (Xᵣ*[n]*) und dem Fehlersignal (eₘ*[n]*) in einen Teilbandfrequenzbereich vor dem Steuern mindestens eines Adaptivfilters (204) durch die mindestens eine Filtersteuereinheit (210) zum Erzeugen des Antischallsignals (y*ₗ[n]*) basierend zumindest auf dem ersten Fehlersignal(eₘ*[n]*) und dem geschätzten Referenzsignal (Xᵣ*[n]*).

12. Verfahren nach Anspruch 11, wobei Erzeugen des geschätzten Referenzsignals (Xᵣ*[n]*) ferner Erzeugen des geschätzten Referenzsignals (Xᵣ*[n]*), das einen interessierenden Frequenzbereich aufweist, basierend zumindest auf einem von der Fahrzeuggeschwindigkeit, der Temperatur des Reifens des Fahrzeugs oder dem Reifendruck beinhaltet.

13. Verfahren nach Anspruch 11, wobei Erzeugen des geschätzten Referenzsignals (Xᵣ*[n]*) ferner Erzeugen des geschätzten Referenzsignals (Xᵣ*[n]*) unabhängig von Informationen von einem Beschleunigungsmesser beinhaltet.

14. Verfahren nach Anspruch 11, ferner umfassend einen Speichern eines Frequenzwerts zum Bereitstellen des geschätzten Referenzsignals (Xᵣ*[n]*) in einer Nachschlagetabelle (LUT) vor dem Übertragen des Antischalls innerhalb der Kabine des Fahrzeugs.

## Revendications

1. Système d'annulation active de bruit (ANC) (200) comprenant :
au moins un haut-parleur (212) pour projeter un son anti-bruit au sein d'un habitacle d'un véhicule sur la base au moins d'un signal de référence estimé (Xᵣ*[n]*) et d'un signal anti-bruit (y*ₗ[n]*) ;
au moins un microphone (214) pour fournir un premier signal d'erreur (eₘ*[n]*) indiquant le bruit et le son anti-bruit au sein de l'habitacle ;
au moins un organe de commande de filtre (210) programmé pour :
recevoir le premier signal d'erreur (eₘ*[n]*) et le signal de référence estimé (Xᵣ*[n]*) ; et
commander au moins un filtre adaptatif (204) pour générer le signal anti-bruit (y*ₗ[n]*) sur la base au moins du premier signal d'erreur (eₘ*[n]*) et du signal de référence estimé (Xᵣ*[n]*) ; et
un générateur de référence (203) programmé pour générer le signal de référence estimé (Xᵣ*[n]*) sur la base au moins de l'un parmi une vitesse de véhicule, une température d'un pneu du véhicule ou une pression de pneu ; et
un mélangeur abaisseur de fréquence (206a, 206b) programmé pour convertir un signal à bande passante complète de l'un parmi le signal de référence estimé (Xᵣ*[n]*) et le signal d'erreur (eₘ*[n]*) en une plage de fréquences de sous-bande avant que l'au moins un organe de commande de filtre (210) ne commande à l'au moins un filtre adaptatif (204) de générer le signal anti-bruit (y*ₗ[n]*) sur la base au moins du premier signal d'erreur (eₘ*[n]*) et du signal de référence estimé (Xᵣ*[n]*).

2. Système ANC (200) selon la revendication 1, dans lequel le générateur de référence (203) est en outre programmé pour générer le signal de référence estimé (Xᵣ*[n]*) ayant une plage de fréquences d'intérêt sur la base au moins de l'un parmi la vitesse de véhicule, la température du pneu du véhicule ou la pression de pneu.

3. Système ANC (200) selon la revendication 1, dans lequel le générateur de référence (203) est en outre programmé pour générer le signal de référence estimé (Xᵣ*[n]*) indépendamment des informations en provenance d'un accéléromètre.

4. Système ANC (200) selon la revendication 1 comprenant en outre une mémoire comportant une table de consultation (LUT) pour stocker une valeur de fréquence afin de fournir le signal de référence estimé (Xᵣ*[n]*) à l'au moins un organe de commande de filtre (210) sur la base au moins de l'un parmi la vitesse de véhicule, la température du pneu du véhicule ou la pression de pneu.

5. Système ANC (200) selon la revendication 4, dans lequel la LUT stocke la valeur de fréquence sur la base au moins de l'un parmi la vitesse de véhicule, la température du pneu du véhicule ou la pression de pneu pour chaque pneu du véhicule.

6. Système ANC (200) selon la revendication 5, dans lequel le générateur de référence (203) comporte un mélangeur (704) pour additionner chaque valeur de fréquence pour chaque pneu du véhicule afin de fournir le signal de référence estimé (Xᵣ*[n]*) comme un seul signal de référence estimé (Xᵣ*[n]*).

7. Système ANC (200) selon la revendication 1, dans lequel le générateur de référence (203) comporte un modèle entraîné (800) qui fournit une enveloppe spectrale d'une plage de fréquences d'intérêt pour le signal de référence estimé (Xᵣ*[n]*) sur la base de paramètres environnementaux.

8. Système ANC (200) selon la revendication 7, dans lequel les paramètres environnementaux correspondent à au moins l'un parmi la vitesse de véhicule, la température d'un pneu du véhicule ou la pression de pneu.

9. Système ANC (200) selon la revendication 7, dans lequel le modèle entraîné (800) représente un ensemble de données historiques pour la vitesse de véhicule, la température du pneu et la pression de pneu et une valeur de fréquence correspondante.

10. Système ANC (200) selon la revendication 1, dans lequel le mélangeur abaisseur de fréquence (206a, 206b) comporte :
un premier filtre anti-repliement (500) programmé pour atténuer l'un parmi le signal de référence estimé (Xᵣ*[n]*) et le signal d'erreur (eₘ*[n]*) afin de fournir une première sortie ;
un premier décimateur (502) programmé pour abaisser une fréquence d'échantillonnage de la première sortie afin de fournir une deuxième sortie ;
un circuit multiplicateur (504) programmé pour recevoir une fréquence de référence et la deuxième sortie afin de fournir un signal exponentiel complexe ;
un second filtre anti-repliement (506) programmé pour supprimer des fréquences de la fréquence de référence qui se trouvent en dehors d'une plage de fréquences prédéterminée ;
un second décimateur (508) programmé pour fournir une décimation d'une troisième sortie du second filtre anti-repliement (506) afin d'augmenter une résolution de fréquence de l'un parmi le signal de référence et le signal d'erreur (eₘ*[n]*).

11. Procédé de réalisation d'une annulation active de bruit (ANC), le procédé comprenant :
la transmission d'un son anti-bruit au sein d'un habitacle d'un véhicule sur la base au moins d'un signal de référence estimé (Xᵣ*[n]*) et d'un signal anti-bruit (y*ₗ[n]* );
la fourniture d'un premier signal d'erreur (eₘ*[n]*) indiquant le bruit et le son anti-bruit au sein de l'habitacle ;
la réception, par au moins un organe de commande de filtre (210), du premier signal d'erreur (eₘ*[n]*) et du signal de référence estimé (Xᵣ*[n]*) ;
la commande d'au moins un filtre adaptatif (204), par l'intermédiaire de l'au moins un organe de commande de filtre (210), pour générer le signal anti-bruit (y*ₗ[n]*) par l'intermédiaire de l'au moins un organe de commande de filtre (210) sur la base au moins du premier signal d'erreur (eₘ*[n]*) et du signal de référence estimé (Xᵣ*[n]*) ;
la génération du signal de référence estimé (Xᵣ*[n]*) sur la base au moins de l'un parmi la vitesse de véhicule, la température d'un pneu du véhicule ou la pression de pneu ; et
la conversion, par un mélangeur abaisseur de fréquence (206a, 206b), d'un signal à bande passante complète de l'un parmi le signal de référence estimé (Xᵣ*[n]*) et le signal d'erreur (eₘ*[n]*) en une plage de fréquences de sous-bande avant que l'au moins un organe de commande de filtre (210) ne commande à l'au moins un filtre adaptatif (204) de générer le signal anti-bruit (y*ₗ[n]*) sur la base au moins du premier signal d'erreur (eₘ*[n]*) et du signal de référence estimé (Xᵣ*[n]*).

12. Procédé selon la revendication 11, dans lequel la génération du signal de référence estimé (Xᵣ*[n]*) comporte en outre la génération du signal de référence estimé (Xᵣ*[n]*) ayant une plage de fréquences d'intérêt sur la base au moins de l'un parmi la vitesse de véhicule, la température du pneu du véhicule ou la pression de pneu.

13. Procédé selon la revendication 11, dans lequel la génération du signal de référence estimé (Xᵣ*[n]*) comporte en outre la génération du signal de référence estimé (Xᵣ*[n]*) indépendamment des informations en provenance d'un accéléromètre.

14. Procédé selon la revendication 11 comprenant en outre le stockage d'une valeur de fréquence pour fournir le signal de référence estimé (Xᵣ*[n]*) dans une table de consultation (LUT) avant la transmission du son anti-bruit au sein de l'habitacle du véhicule.
